# EUROPEAN PATENT APPLICATION

(11) **EP 1 321 387 A2**
(43) Date of publication of application: **25.06.2003**
(21) Application number: 02025019.7
(22) Date of filing: 08.11.2002
(51) Int. Cl.: B65G 15/10, B65G 15/60, B65G 23/04, B65G 21/14, B65G 39/10

(54) **Adjustable belt conveyor**

(30) Priority: 21.12.2001 IT BO20010772
(71) Applicant: M.C. s.r.l., 48018 Faenza (Ravenna) (IT)
(72) Inventor: Valentini, Vladimiro, 48018 Faenza (Ravenna) (IT); Neri, Ermes, 48018 Faenza (Ravenna) (IT)
(74) Representative: Modiano, Guido, Dr.-Ing.

(57) **Abstract**

A belt-type conveyor with adjustable format comprising a first end (5), which rotatably supports a first driven pulley (7) and a second driven pulley (8) which are coaxial, and a second end (16), which rotatably supports a driving pulley (9) and a guiding pulley (10) which are coaxial, a conveyor belt (12) being wound around the pulleys (7-10), being closed in a loop and forming first and second upper active parallel portions (13,14), which are connected by first and second lower portions (15,16) that cross in an X-like arrangement.

## Description

The present invention relates to a belt-type conveyor with adjustable format.

In the particular field of tile production, conveyor lines that convey the products through the various processing stations of facilities are widespread.

These conveyor lines, usually composed of modular elements that can be queued in succession, can reach lengths of several tens of meters; moreover, they often have portions that convey the products at significantly different speeds according to the requirements of the production process.

The lines are substantially constituted by two or more parallel and independent belts, wound around corresponding driving and driven pulleys, which transfer the products onto respective upper active portions. During the operation of the line, the peripheral advancement speed must be the same for the various belts, in order to avoid rotations or movements of the products during transfer.

Due to the wear of belts and pulleys after prolonged use, or due to imperfections in the machining of these components, there is often a discrepancy, albeit a small one, between the peripheral speeds of the belts, which inevitably causes unwanted instabilities, especially for long conveyance paths.

Moreover, conveyor lines must meet requirements of flexibility and versatility, mainly as regards the ability to convey products whose dimensions vary even considerably, without altering performance and effectiveness of operation; it is also necessary for the conveyance belts to be removable rapidly for replacement without having to disassemble mechanical parts as part of the maintenance interventions that the line periodically undergoes.

The aim of the present invention is to obviate the above cited drawbacks by providing a belt-type conveyor in which the peripheral conveyance speed on the active upper portions of the belts is substantially uniform among the various portions.

Within this aim, an object of the present invention is to provide a belt-type conveyor in which the peripheral speed of conveyance on the active upper portions of the belts is independent of the diameter of the pulleys, of imperfections in their machining and of the wear of the belts.

Another object of the present invention is to provide a belt-type conveyor that is free from instabilities in the conveyance of the products.

Another object of the present invention is to provide a belt-type conveyor that is highly versatile, i.e., capable of conveying, with a single actuation motor, products having even highly variable dimensions.

Another object of the present invention is to provide a belt-type conveyor in which the belts can be replaced simply and easily without having to resort to the disassembly of mechanical parts.

A further object of the present invention is to provide a belt-type conveyor that is modular in order to provide even very long lines.

Still another object of the present invention is to provide a structure that is simple, relatively easy to provide in practice, safe in use, effective in operation, and relatively low in cost.

This aim and these and other objects which will become better apparent hereinafter, are achieved by the present belt-type conveyor with adjustable format, characterized in that it comprises an input end, which rotatably supports a first driven pulley and a second driven pulley which are coaxial, and an output end, which rotatably supports a driving pulley and a guiding pulley which are coaxial, a conveyor belt being wound around said pulleys and being closed in a loop and forming first and second upper active parallel portions that are connected by first and second lower portions that cross in an X-like arrangement.

Further features and advantages will become better apparent from the detailed description of a preferred but not exclusive embodiment of a belt-type conveyor with adjustable format according to the invention, illustrated only by way of non-limitative example in the accompanying drawings, wherein:
Figure 1 is a perspective view of the belt-type conveyor with adjustable format according to the invention;
Figure 2 is a front view of said conveyor;
Figure 3 is a detail side elevation view of the conveyor;
Figure 4 is a detail bottom view of the conveyor.

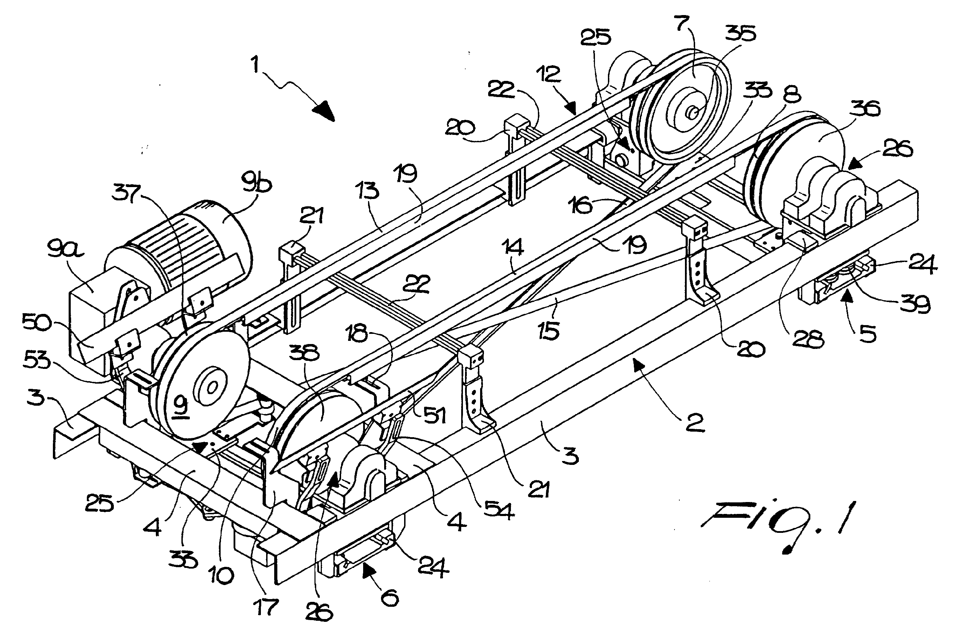

With particular reference to Figure 1, the reference numeral 1 generally designates a belt-type conveyor with adjustable format according to the invention.

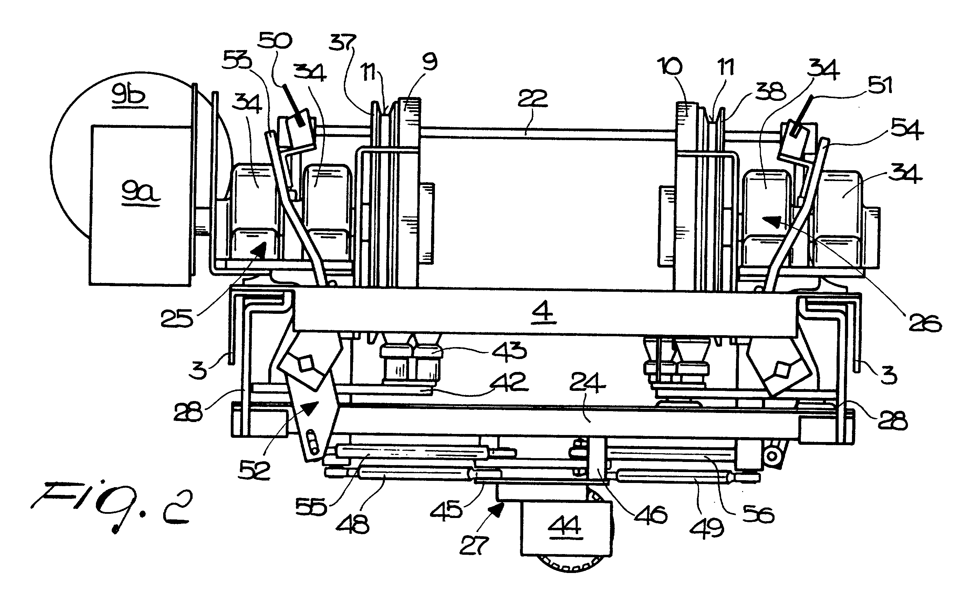

The device comprises a chassis 2, which is substantially frame-shaped and is constituted by two longitudinal members 3 connected by cross-members 4; the chassis has a first end 5 and a second end 6. A first driven pulley 7 and a second driven pulley 8, are supported rotatably at the first end 5 and are coaxial, while a driving pulley 9, keyed on the output shaft of a gearbox 9a with a corresponding motor 9b, and a guiding pulley 10 are rotatably supported at the second end 6 and are coaxial: the second driven pulley 8, the driving pulley 9 and the guiding pulley 10 have, on their lateral surface, an annular trapezoidal race 11 (Figure 2), while the first driven pulley 7 has two annular trapezoidal races 11 arranged side by side, as can be derived from Figure 1.

A belt 12 is wound around pulleys 7, 8, 9 and 10, has a substantially trapezoidal cross-section, is closed in a loop and defines a first upper portion 13 and a second upper portion 14, which are active and parallel and on which the products are conveyed, and a first lower portion 15 and a second lower portion 16, which cross in an X-like arrangement.

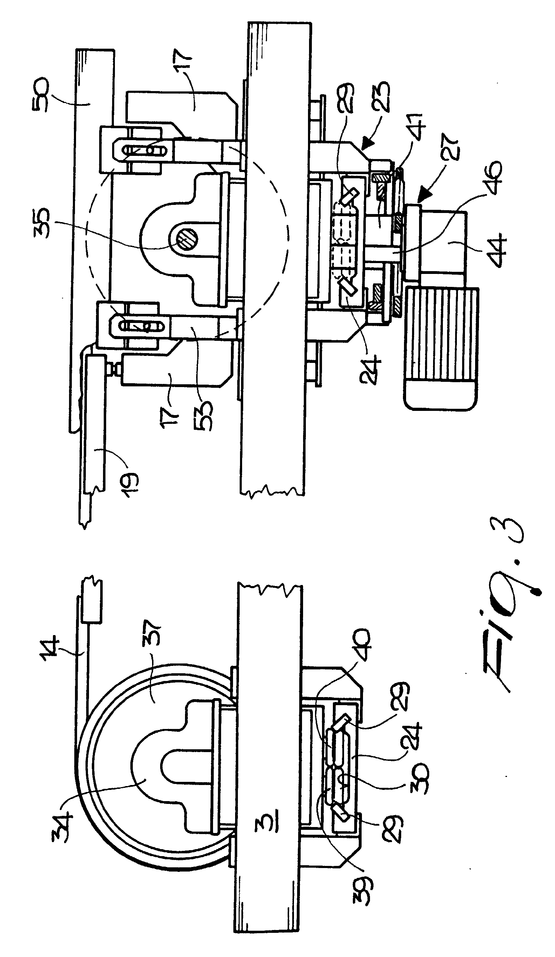

Pairs of brackets 17 (Figures 1 and 3) are fixed to each one of the longitudinal members 3, at the sides of the first and second ends 5 and 6, and are extended vertically; each bracket has a portion 18 that is folded horizontally and is slotted for the locking, adjustable by means of screws, of longitudinal bars 19 that have a substantially H-shaped transverse cross-section and are designed for the sliding and support of the upper portions 13 and 14 of the belt 12.

In the regions between the first and second ends 5 and 6, the longitudinal members 3 are provided with two rigidly coupled pairs of posts 20 and 21 for the adjustable support of cross-members 22 for support during product conveyance.

The first end 5 and the second end 6 of the device are associated with respective translational motion means 23 (Figure 3), which are suitable to adjust the mutual distance between the first upper portion 13 and the second upper portion 14.

The translational motion means 23 comprise, at each end 5 and 6, a respective track 24 that lies transversely to the upper portions 13 and 14 and on which a first carriage 25 and a second carriage 26 are guided slidingly in opposite directions in order to rotatably support the respective pulleys 7, 8, 9 and 10: said carriages 25 and 26 are adjustable, with the aid of servo-assisted actuation means 27 (Figures 2, 3 and 4), from a least open position, in which they are substantially mutually adjacent, to a fully open position, in which they are arranged at the opposite ends of the corresponding track 24.

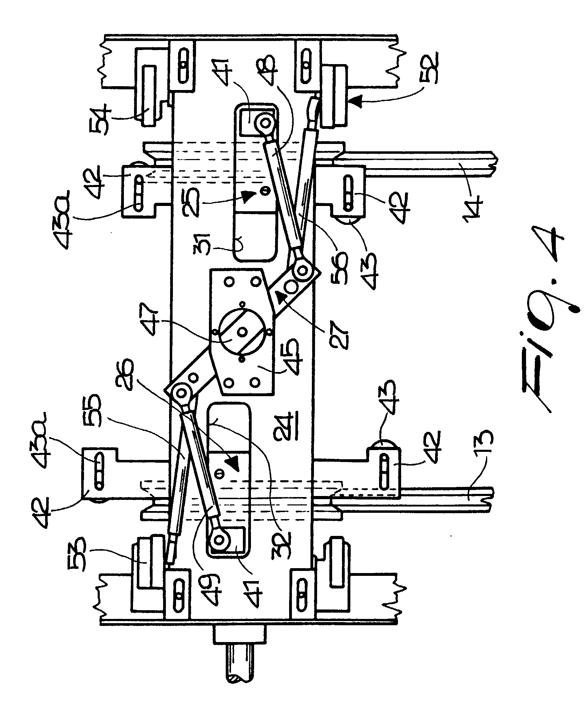

Each track 24, fixed transversely below the longitudinal members 3 by means of respective pairs of lower brackets 28, has a substantially U-shaped transverse cross-section, to the internal corners of which longitudinal inclined strips 29 are fixed (Figure 3); said strips are shaped like an elongated parallelepiped and have two respective mutually facing edges. The bottom 30 of the track 24 has a first slot 31 and a second slot 32, which are longitudinal and substantially rectangular and symmetrical with respect to the centerline of said track (Figure 4).

Each one of the carriages 25 and 26 is constituted by a substantially rectangular plate 33, on the upper face of which a respective pair of rotatable supports 34 is rigidly coupled; said supports have corresponding coaxial rolling bearings for a pivot 35 for the keying of a respective pulley. In particular, the second driven pulley 8 is keyed and associated with a first idler pulley 36 that is coaxial thereto and laterally adjacent thereto, while the driving pulley 9 and the guiding pulley 10 are respectively keyed and associated with a second idler pulley 37 and a third idler pulley 38 (Figure 1): said idler pulleys 36, 37 and 38 are suitable for the winding of additional trapezoidal belts for extending the conveyance line from either end 5 and 6.

The lower face of the plate 33 provides a rotatable support for a plurality of pairs of wheels 39 having a vertical axis of rotation, which are provided with annular races 40 on the lateral surface (Figure 3); said races engage in the respective edges of the strips 29 in order to slidingly guide the carriages 25 and 26 along the corresponding tracks 24. Furthermore, the plate 33 forms a downward extension 41 that is shaped substantially like a parallelepiped and is engaged respectively along the first slot 31 or along the second slot 32.

Respective wings 42 for rotatably supporting guiding wheels 43 having a vertical axis for the lower portions 15 and 16 of the belt 12 are rigidly coupled by means of screws to each plate 33 on the two opposite sides that are parallel to the tracks 24, and are engaged in respective slots 43a that are parallel to the tracks 24 (Figure 4). The guiding wheels 43 are suitable to ensure that the lower portions of the belt 15, 16 do not escape accidentally from the trapezoidal races 11 of the pulleys 7, 8, 9 and 10.

The servo-assisted actuation means 27 are constituted by a gearmotor 44, which has a vertical axis that is fixed, under each track 24, on a respective quadrangular flange 45, which is supported at its corners by four blocks 46, which are bolted substantially at the centerline of said track 24 (see in this regard Figure 3, where only the gearmotor 44 related to the second end 6 has been shown for the sake of clarity).

A crank 47 is keyed, substantially in its central portion, in the space formed between each track 24 and the respective flange 45 on the output shaft of the gearmotor 44; such crank 47 oscillates, on a horizontal plane that lies below the respective track 24, between two angular end positions. A first linkage 48 (Figure 4) is articulated between the first end of the crank 47 and the downward extension 41 of the first carriage 25, which can slide along the first slot 31; a second linkage 49 is instead articulated between the second end of the crank 47 and the downward extension 41 of the second carriage 26, which can slide along the second slot 32 of the track 24. The angular end positions of the crank 47 therefore correspond respectively to the least open and fully open positions of the first and second carriages 25 and 26.

The second end 6 of the device, which can be a region of transition between two portions of a line having different peripheral speeds and as such can cause instabilities of the products as they advance, is provided with a first side wall 50 and with a second side wall 51 for the conveyed products (Figures 1 and 2), which are arranged laterally and parallel to the respective first upper portion 13 and second upper portion 14 and are associated with means 52 for adjusting the distance of each side wall with respect to the corresponding upper portion.

The side walls 50 and 51 are substantially constituted by elongated rectangular bars: the adjustment means 52 comprise first and second pairs of supports 53 and 54, which are parallel and are fixed, at the respective upper ends, at right angles to the corresponding side walls 50 and 51 and are pivoted, in the intermediate portion along parallel and longitudinal axes, to the chassis 2 of the device. The lower ends of one of the supports of each first and second pair 53, 54 are articulated, respectively by means of a first arm 55 and a second arm 56, to mutually opposite portions of the crank 47, said portions being located between the centerline of said crank and the points of articulation to the respective first and second linkages 48, 49 (Figure 4). The adjustment means 52 are suitable to arrange the first and second side walls 50 and 51 at a distance from the respective first and second upper portions 13 and 14 that is smallest when the first and second carriages 25, 26 are in the least open position and is greatest when the first and second carriages are in the fully open position: said distance increases gradually in each intermediate open position.

The operation of the belt-type conveyor according to the invention is as follows. Depending on the width of the products to be conveyed, the mutual distance between the first upper portion 13 and the second upper portion 14 is adjusted by acting on the servo-assisted actuation means 27: the synchronized rotation of the cranks 27 keyed on the respective gearmotors 14 causes, by means of the first and second linkages 48 and 49, the translational motion in opposite directions respectively of the first and second carriages 25 and 26 along the corresponding tracks 24 and the movement of the first and second side walls 50 and 51 respectively by means of the first and second arms 55 and 56. By then actuating the motor 9b, the driving pulley 10 and accordingly the belt 12 are turned, and the belt can transfer the products onto the corresponding upper portions 13 and 14.

The belt-type conveyor is therefore capable of conveying effectively, with a single actuation motor, products having different widths and formats by means of simple and rapid actions on the servo-assisted actuation means 27, and is free from instabilities of the products caused by differences in the tangential speed of the upper portions 13 and 14 of the belts; said tangential speed is substantially independent of the diameter of the pulleys, of any imperfections in their machining, and of belt wear. Moreover, replacement of the worn belt is easy and fast, without disassembling mechanical parts.

It has thus been shown that the invention achieves the intended aim and objects.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of the appended claims.

The disclosures in Italian Patent Application No. BO2001A000772 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A belt-type conveyor with adjustable format, **characterized in that** it comprises a first end (5), which rotatably supports a first driven pulley (7) and a second driven pulley (8) which are coaxial, and a second end (6), which rotatably supports a driving pulley (9) and a guiding pulley (10) which are coaxial, a conveyor belt (12) being wound around said pulleys (7, 8, 9, 10), being closed in a loop and forming first and second upper active parallel portions (13, 14) that are connected by first and second lower portions (15, 16) that cross in an X-like arrangement.

2. The belt-type conveyor according to claim 1, **characterized in that** said first and second ends (5, 6) are associated with respective translational motion means (23), to adjust the mutual distance between said first upper portion (13) and said second upper portion (14).

3. The belt-type conveyor according to claim 2, **characterized in that** said translational motion means (23) comprise, for each one of said first and second ends (5, 6), a respective track (24) that lies transversely to said upper portions (13, 14) and on which a first carriage (25) and a second carriage (26) are guided so that they can slide in opposite directions in order to rotatably support said pulleys (7, 8, 9, 10), said carriages (25, 26) being adjustable from a least open position, in which they are mutually adjacent, to a fully open position, in which they are arranged at the opposite ends of said track (24).

4. The belt-type conveyor according to claim 3, **characterized in that** said first and second carriages (25, 26) are associated with servo-assisted actuation means (27) for movement along said tracks (24).

5. The belt-type conveyor according to claim 4, **characterized in that** said servo-assisted actuation means (27) comprise a gearmotor (44) that is fixed in a downward region substantially at the centerline of said track (24) and on the output shaft of which a crank (47) is keyed in its central portion, a first linkage (48) being articulated between the first end of said crank (47) and said first carriage (25) through a first slot (31) provided in the bottom (30) of said track (24), a second linkage (49) being articulated between the second end of said crank (47) and said second carriage (26) through a second slot (32) formed in the bottom (30) of said track (24).

6. The belt-type conveyor according to claim 1, **characterized in that** said driving pulley (9) is keyed on the output shaft of a gearbox (9a) that is actuated by a motor (9b).

7. The belt-type conveyor according to claim 1, **characterized in that** at said second end (6) there are first and second side walls (50, 51) for products, which are arranged laterally respectively to said first upper portion (13) and to said second upper portion (14) and are parallel thereto, said side walls (50, 51) being associated with means (52) for adjusting the distance of each side wall (50, 51) with respect to the respective upper portion (13, 14).

8. The belt-type conveyor according to claim 7, **characterized in that** said adjustment means (52) comprise first and second pairs of supports (53, 54) which are fixed, at their upper ends, respectively to said first and second side walls (50, 51), are pivoted so as to oscillate about respective intermediate fixed axes and have lower ends that are articulated, by means of respective first and second arms (55, 56), to mutually opposite portions of said crank (47), which are arranged between the centerline and the points of articulation respectively to said first and second linkages (48, 49).

9. The belt-type conveyor according to claim 7, **characterized in that** said adjustment means (52) are suitable to arrange said first and second side walls (50, 51) at a distance from said first and second upper portions (13, 14), respectively, that is smallest when said first and second carriages (25, 26) are in the least open position and is greatest when said first and second carriages are in the fully open position, said distance increasing gradually in each intermediate open position.
